# EUROPÄISCHE PATENTSCHRIFT

(11) **EP 1 920 649 B1**
(45) Veröffentlichungstag und Bekanntmachung des Hinweises auf die Patenterteilung: **07.09.2011**
(21) Anmeldenummer: 07120183.4
(22) Anmeldetag: 07.11.2007
(51) Int. Cl.: A01G 3/04, A01G 3/053

(54) **Heckenschneidvorrichtung**
Hedge cutting device
Dispositif de taille haie

(30) Priorität: 09.11.2006 DE 102006053284
(43) Veröffentlichungstag der Anmeldung: 14.05.2008
(73) Patentinhaber: Horcher, Willi, 61137 Schöneck (DE)
(72) Erfinder: Horcher, Willi, 61137 Schöneck (DE)
(74) Vertreter: Stoffregen, Hans-Herbert

(56) Entgegenhaltungen:
- BE-A7- 1 010 411
- FR-A1- 2 257 223
- US-A- 1 627 258
- US-A- 4 777 787

## Beschreibung

Heckenschneidvorrichtung, umfassend ein in zumindest einer Führungseinrichtung entlang einer Hecke verschiebbares Fahrgestell zum Halten und Führen zumindest einer Heckenschere mit Schnittbalken, wobei das Fahrgestell als ein die Hecke umschließender, in Höhe, Breite und Neigung variabel einstellbarer U-förmiger Rahmen ausgebildet ist, mit vertikalen Rahmenelementen, die bodenseitig in jeweils einer der Führungseinrichtungen geführt sind, und einem horizontalen Rahmenelement zur Verbindung der vertikalen Rahmenelemente.

Eine Heckenschneidvorrichtung der eingangs genannten Art ist in der Druckschrift US 1,627,258 beschrieben. Diese weist in zumindest einer Führungseinrichtung ein entlang einer Hecke verschiebbares Fahrgestell zum Halten und Führen zumindest einer Heckenschere auf. Bei dieser Ausführungsform ist das Fahrgestell als ein die Hecke umschließender, in Höhe, Breite und Neigung variabel einstellbarer U-förmiger Rahmen ausgebildet, mit vertikalen Rahmenelementen, die bodenseitig in jeweils einer der Führungseinrichtungen geführt sind, und einem horizontalen Rahmenelement zur Verbindung der vertikalen Rahmenelemente.

Als Heckenschere wird eine handbetriebene Heckenschere verwendet, die ebenfalls einen Schneidbalken umfasst, der an einem Gestell befestigt ist. Der Schneidbalken besteht aus einem feststehenden Messer, welches über Ausleger an dem Rahmen befestigt ist sowie ein bewegliches Messer, welches an dem stationären Messer über Betätigungselemente hin und her bewegbar befestigt ist.

Die Betätigung der mechanischen Heckenschere ist mit einem erheblichen Kraftaufwand verbunden und die Befestigung des Schneidbalkens an den von den Rahmen ausgehenden und parallel zu einer Heckenfläche verlaufenden Auslegern hat den Nachteil, dass eine stabile Halterung des Schneidbalkens nicht gewährleistet ist. Insbesondere dann, wenn der Rahmen entlang der Führungseinrichtung verfahren wird, kann es zu Schwingungen der Ausleger kommen.

In der DE 38 35 094 A wird eine Vorrichtung zum Halten und Führen einer elektrischen Heckenschere beschrieben, wobei allerdings die Heckenschere nicht an dem Schneidbalken sondern an dem Antriebselement selbst gehalten wird. Als Nachteil dieser Ausführungsform ist zu erwähnen, dass der Schneidbalken als Ausleger ausgebildet ist, so dass eine präzise Führung während der Vorwärtsbewegung nicht gewährleistet ist.

In der DE 101 27 725 A ist eine Vorrichtung zum Schneiden von Hecken mit Stäben beschrieben, die so miteinander verbunden sind, dass dadurch zumindest zwei Flächen gebildet werden, welche die Vorlage für das Zuschneiden zumindest eines Teiles zweier gegenüberliegender Seitenflächen einer Hecke bilden und zwischen welchen die Hecke aufgenommen werden kann. Auch bei dieser Ausführungsform wird eine elektrische Heckenschere verwendet, die allerdings ebenfalls wie in der Ausführungsform nach DE 38 35 094 mit dem Antriebselement an dem Rahmen befestigt ist, wobei der Schneidbalken einen Ausleger bildet, mit den oben beschriebenen Nachteilen.

Eine in der DE 38 38 703 A1 offenbarte Heckenschneidvorrichtung umfasst eine fahrbare Haltevorrichtung für Handwerkzeuge wie motorbetriebene Heckenscheren, die zum Schneiden von Busch-, Strauch- und Baumreihen geeignet ist. Die Haltevorrichtung besteht aus einem L- oder T-förmigen Träger mit einem feststellbaren Haltekopf für das Handwerkzeug und einem fahrbaren Schlitten auf Rollen und Anschlagrädern, Abstandhaltern oder Führungselementen, auf denen der Träger angeordnet ist.

Das Fahrgestell wird lediglich von einer einzigen Fahrschiene geführt, so dass ein Kippen der Haltevorrichtung nicht auszuschließen ist. Ferner ist die Heckenschere lediglich mit ihrem Handgriff an einem Ausleger des L- oder T-förmigen Trägers angeordnet, so dass ein Schneidbalken der Heckenschere frei auskragt und während der Schneidbewegung starke Kräfte auf die Halterung einwirken. Dies kann die Haltbarkeit, Schnittgeschwindigkeit sowie -genauigkeit negativ beeinflussen.

Weitere Vorrichtungen zum Halten und Führen einer elektrischen Heckenschere sind in der DE 41 21 132 C2, DE 38 35 094 C2 sowie DE 40 34 284 A1 offenbart. Auch bei diesen Ausführungsformen ist die Heckenschere antriebsseitig gelenkig mit einem Fahrgestell verbunden mit der Folge, dass durch den frei auskragenden Scherbalken beim Schneidvorgang starke Kräfte auf die Halterung übertragen werden.

Den oben beschriebenen Haltevorrichtungen liegt der Nachteil zugrunde, dass die Haltevorrichtungen zum beidseitigen Schneiden von Hecken umgesetzt werden müssen, was mit erhöhtem Aufwand verbunden ist.

Aus der DE 94 18 742 U1 ist eine Universal Heckenschneid- und Mähmaschine bekannt, die mit einem Fahrgestell ausgestattet ist und vorzugsweise auf Schienen bewegt wird. Diese zeichnet sich dadurch aus, dass die einzelnen Messersegmente durch Scharniere, die sich auch feststellen lassen, der Form von z. B. einer Gartenhecke als Schneidobjekt angepasst werden. Bei dieser Ausführungsform müssen die Messersegmente an Form und Größe der zu schneidenden Gartenhecke angepasst sein, so dass diese Heckenschneidmaschine nicht universal einsetzbar ist. Die einzelnen Messersegmente sind durch Scharniere miteinander verbunden, was ebenfalls mit einem erheblichen Aufwand insbesondere betreffend die Antriebstechnik der sich gegeneinander bewegenden Schneidelemente verbunden ist.

In der DE 30 24 806 A1 ist eine Vorrichtung zum Beschneiden von Hecken mit über Antriebseinrichtungen gegenläufig bewegten Scherblättern beschrieben. Diese zeichnet sich dadurch aus, dass an einem längs einer Schiene in eine Richtung bewegbaren Wagen zumindest ein Scherarm angelenkt ist, dem gegebenenfalls eine Absaugeinrichtung für abgeschnittene Heckenteile folgt. Auch bei dieser Heckenschneidvorrichtung ist lediglich eine Führungsschiene vorgesehen, so dass insbesondere beim Schneiden einer der Führungsschiene gegenüberliegenden Seite der Hecke hohe Kräfte auf die Führung ausgeübt werden, mit der Folge, dass diese zu einem ungenauen Heckenschnitt führt.

Davon ausgehend liegt der vorliegenden Erfindung das Problem zugrunde, eine Heckenschneidvorrichtung der eingangs genannten Art dahingehend weiterzubilden, dass eine einfache Anpassung an eine gewünschte Heckenform und eine stabile Führung für die Heckenschere bei geringem Aufwand erreicht wird.

Diese Aufgabe wird durch die Merkmale des Anspruchs 1 gelöst.

Die Aufgabe wird erfindungsgemäß unter anderem dadurch gelöst, dass die Heckenschere als motorbetriebene Heckenschere ausgebildet ist, wobei der Schneidbalken von einer Antriebseinheit ausgeht und auf einer der Hecke zugewandten Seite und in einer von den Rahmenelementen aufgespannten Ebene an sich von den Rahmenelementen in Richtung der Hecke erstreckenden Befestigungselementen befestigbar ist.

Durch die beidseitige Führung des die Hecke umschließenden U-förmigen Rahmens wird im Gegensatz zum Stand der Technik eine sehr stabile Führung der Heckenschere erreicht. Insbesondere durch die Befestigung der Heckenschere an deren Schneidbalken an Rahmenelementen des Fahrgestells ist eine exakte Führung gewährleistet.

Der U-förmige Rahmen besteht aus den vertikalen Rahmenelementen und einem diese miteinander verbindenden horizontalen Rahmenelement, wobei das horizontale Rahmenelement über Klemmelemente lösbar mit den vertikalen Rahmenelementen verbunden ist, um somit eine Höhen-, Breiten- und Neigungsanpassung der einzelnen Elemente zu erreichen. Die Anpassung kann ebenfalls durch Klemmvorrichtungen vorgenommen werden.

Als Heckenschere ist eine handelsübliche motorbetriebene Handheckenschere eingebaut, umfassend eine Antriebseinheit mit Handgriff sowie den von der Antriebseinheit ausgehenden Schneidbalken. Der Schneidbalken ist über Befestigungselemente wie Schraubbolzen mit Abstandhalter an den Rahmenelementen in beliebiger Höhe befestigbar. Alternativ kann der Schneidbalken auch mit einem feststellbaren Schlitten verbunden sein, der seinerseits mit den Rahmenelementen verbindbar ist. Mit dem Schlitten kann die Heckenschere auf einfache Weise in ihrer Höhe eingestellt werden.

Vorzugsweise ist die Heckenschere als handelsübliche elektrische oder kraftstoffbetriebene Heckenschere ausgebildet. Die Befestigungselemente können als Schraubbolzen oder Abstandshalter ausgebildet sein.

Um eine Fixierung des Fahrgestells in der Führung zu erreichen, ist vorgesehen, dass die vertikalen Rahmenelemente bodenseitig mit jeweils Ober- und Unterrollen versehen sind, so dass ein Kippen des Rahmens ausgeschlossen ist.

Die Führung des Rahmens, welche als Laufschienen oder als Führungsrohre ausgebildet ist, ist vorzugsweise über Befestigungselemente im an die Hecke angrenzenden Boden wie Erdreich fixiert. Dabei ist vorgesehen, dass die Führungen separat in ihrer Höhe verstellbar sind.

Eine Querverschiebung des Rahmens wird dadurch vermieden, dass zumindest ein Rollenpaar eine Nut zur Aufnahme der als Laufschiene ausgebildeten Führung aufweist.

Die Laufschienen können in Längsrichtung aus einzelnen Elementen bestehen, die gesteckt oder verschraubt miteinander verbunden sind. Endseitig sind vorzugsweise Stopper angebracht. Ein weiteres bevorzugtes Merkmal zeichnet sich dadurch aus, dass die Führungen unterhalb der Hecke angeordnet sind.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnung zu entnehmenden bevorzugten Ausführungsbeispielen.

Es zeigen:
- Fig. 1 a), b): eine Vorder- und Seitenansicht des Fahrgestells als ein auf Schienen geführter U-förmiger Rahmen,
- Fig. 2: eine Detailansicht des Fahrgestells gem. Fig. 1 a),
- Fig. 3: Vorder- und Seitenansicht eines vertikalen Rahmenelementen des Fahrgestells gem. Fig. 1,
- Fig. 4: eine Detailansicht bodenseitigen Endes des vertikalen Rahmenabschnitts gemäß Fig. 1 b),
- Fig. 5: eine Detailansicht einer ersten Führungseinrichtung mit Führungsrollen zur Verhinderung von Querbewegungen,
- Fig. 6: eine Detailansicht einer zweiten Führungseinrichtung,
- Fig. 7: eine Detailansicht einer dritten Führungseinrichtung und
- Fig. 8: eine alternative Anordnung der Führungseinrichtung unterhalb der Hecke.

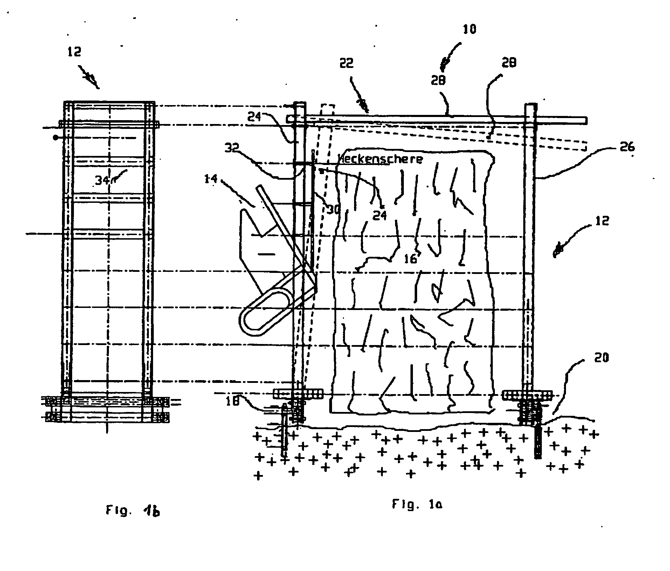

Fig. 1 a) zeigt eine Vorderansicht einer Heckenschneidvorrichtung 10, umfassend ein Fahrgestell 12 zum Halten und Führen zumindest einer elektrischen Heckenschere 14, wobei das Fahrgestell 12 in längs einer Hecke 16 sich erstreckenden Führungseinrichtungen 18, 20 geführt ist. Das Fahrgestell 12 ist als ein die Hecke 16 umschließender U-förmiger Rahmen 22 ausgebildet, umfassend vertikale Rahmenelemente 24, 26 sowie ein die vertikalen Rahmenelemente 24, 26 im oberen Bereich miteinander verbindenden horizontalen Rahmenelement 28. Die vertikalen Rahmenelemente 24, 26 sind bodenseitig in den Führungseinrichtungen 18, 20 geführt und im oberen Bereich über das horizontale Rahmenelement 28 über Klemmvorrichtungen miteinander verbunden, so dass eine Höhen-, Breiten- und Neigungsanpassung ermöglicht wird.

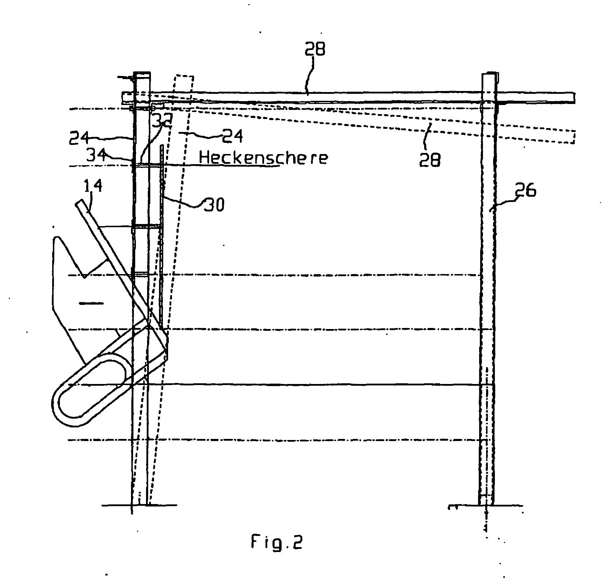

Eine vergrößerte Darstellung der Befestigung der Heckenschere 14 ist in Fig. 2 dargestellt. Dabei erstreckt sich ein Schneidbalken 30 der Heckenschere 14 parallel oder in etwa parallel zu einer von dem vertikalen Rahmenabschnitt 24 aufgespannten Ebene in vertikaler Richtung und ist über Befestigungselemente wie Abstandsbolzen 32 mit Querelementen 34 des Rahmens verbunden. Entsprechende Befestigungselemente 32 und Querelemente 34 sind auch an den weiteren Rahmenelementen 26 und 28 vorhanden, damit die Heckenschere 14 umgesetzt werden kann.

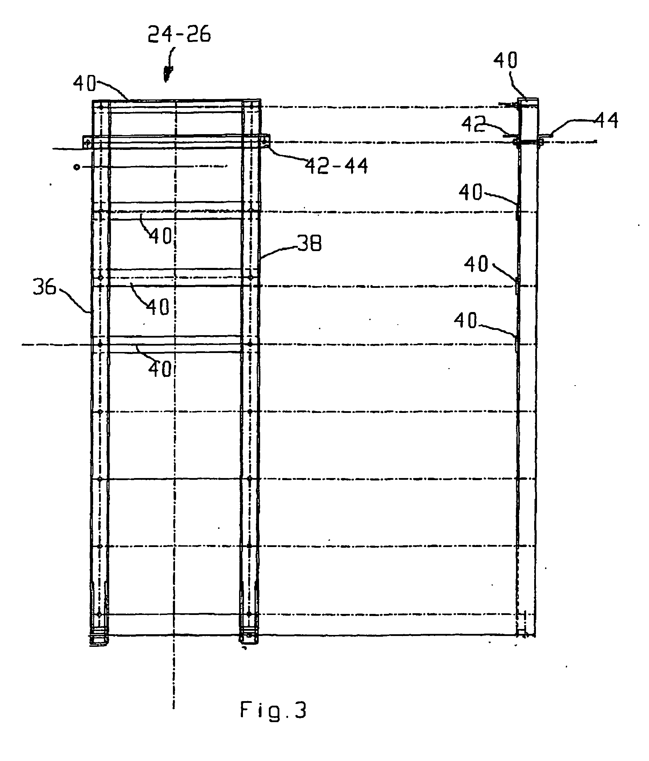

Fig. 3 zeigt den prinzipiellen Aufbau der vertikalen Rahmenelemente 24, 26. Diese sind im Wesentlichen leiterförmig ausgebildet mit vorzugsweise U-förmigen Längsprofilen 36, 38, welche über Querprofile 40 miteinander verbunden sind. Im oberen Bereich jedes vertikalen Rahmenelementes 34, 26 sind Stützelemente 42, 44, vorzugsweise in Form von Winkelprofilen angeordnet, auf denen das horizontale Rahmenelement 28 aufliegt und stufenlos einstellbar befestigbar ist. Die Querprofile 40 bilden gleichzeitig die Querelemente 34 zur Befestigung der Heckenschere 14

Wie in Fig. 1 a) und Fig. 2 dargestellt ist, kann durch Höhenverstellung einerseits der Stützelemente 42, 44 bzw. eine der Führungen 18, 20 eine Schrägstellung des vertikalen Rahmenelementes 24 und des horizontalen Rahmenelementes 28 erreicht werden. Dies ist insbesondere dann notwendig, wenn die zu schneidende Hecke eine Schräge aufweisen soll.

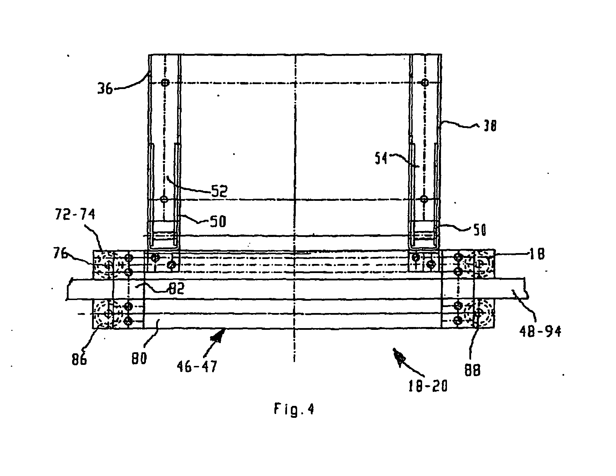

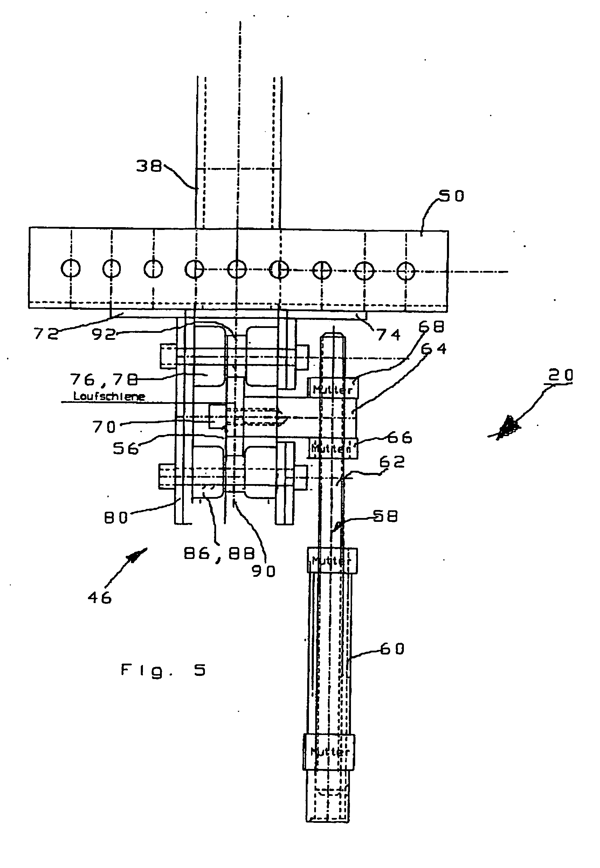

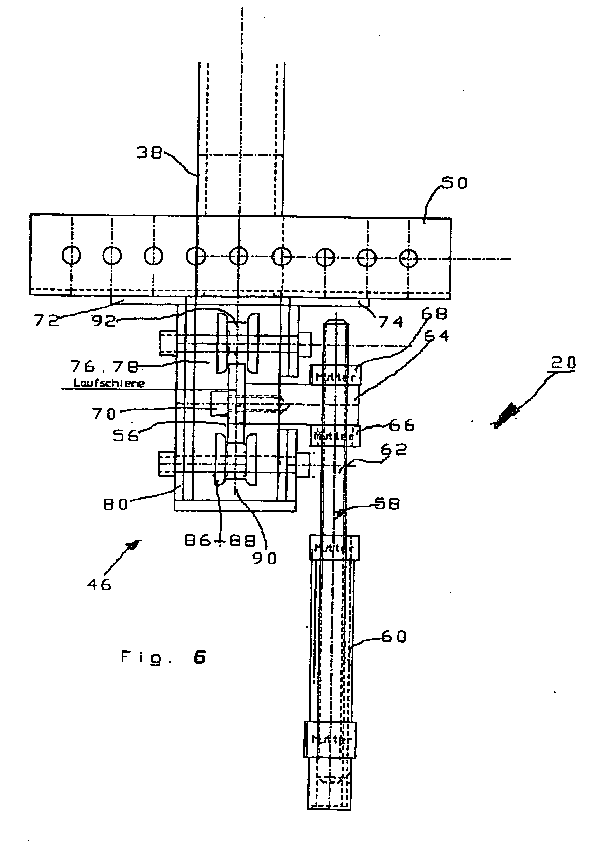

Fig. 4 zeigt einen unteren Bereich der vertikalen Rahmenelemente 24, 26, wobei die Längsprofile 36, 38 mit der Führungseinrichtung 18, 20 verbunden ist. Diese umfasst einen verfahrbaren Schlitten 46, 47, der mit dem Rahmenelement 24, 26 verbunden ist und entlang einer Laufschiene 48 verfahrbar ist. Der Schlitten 46 weist in Fig. 5 und 6 dargestellte quer zur Laufschiene 48 verlaufende Halteelemente 50 auf, in denen je ein Ende 52, 54 der Längsprofile 36, 38 quer zur Fahrrichtung versetzt angeordnet werden kann, um eine Breitenanpassung zu erreichen.

Fig. 5 zeigt eine Seitenansicht der Führungseinrichtung 20, bestehend aus der Laufschiene 48, die über eine Verankerung 58 im Boden verankert ist. Die Verankerung 58 besteht aus einem Bodendübel 60, in dem ein Bolzen wie Gewindebolzen 62 höhenverstellbar eingeschraubt ist. Von dem Gewindebolzen 62 erstreckt sich ein Querausleger 64, der in der Höhe über Muttern 66, 68 stufenlos einstellbar ist. An dem Querausleger 64 ist die Laufschiene 48 ebenfalls über eine Schraube 70 befestigt.

Der Schlitten 46 umfasst parallel oder im Wesentlichen parallel zu der Laufschiene verlaufende Winkelprofile 72, 74, wobei zwischen den gegenüberliegenden Schenkeln der Profile obere Rollenelemente 76, 78 angeordnet sind. Des Weiteren umfasst der Schlitten 46 ein unteres Flachprofil 80, welches über Verbindungselemente 82, 84 mit dem Winkelelement 72 verbunden ist. An dem Flachprofil 80 sind untere Rollenelemente 86, 88 vorgesehen, die von unten in die Laufschiene eingreifen. Die Rollenelemente 76, 78; 86, 88 weisen jeweils eine Rille 90, 92 auf, in der die Laufschiene 56 aufgenommen ist, um eine Querverschiebung des Schlitten 46 zu verhindern.

Während die Rollenelemente 76, 78; 86, 88 gemäß Fig. 5 seitlich durch die Schenkel festgelegt sind, zeigt Fig. 6 eine Ausführungsform, bei der die Rollenelemente 76, 78; 86, 88 auf einer Achse quer verschiebbar angeordnet sind. Damit können sich die Rollenelemente dem Verlauf der Schiene 56 besser anpassen.

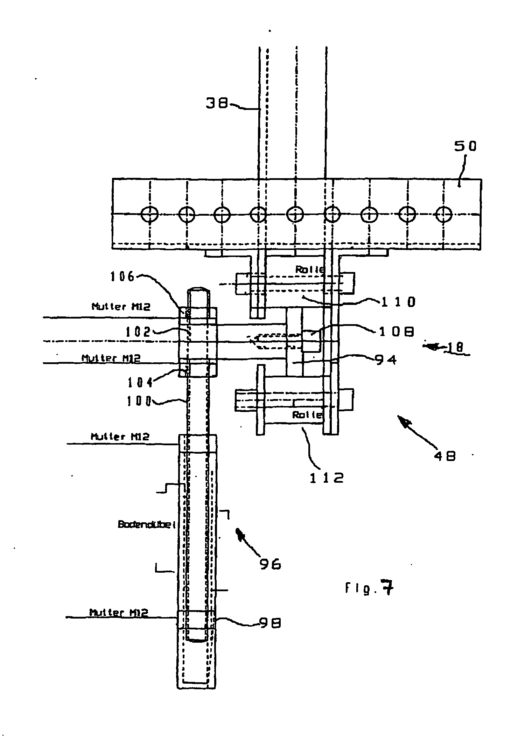

Fig. 7 zeigt eine Seitenansicht der Führungseinrichtung 18, bestehend aus der Laufschiene 94, die mittels einer Verankerung 96 im Boden befestigt ist. Die Verankerung 96 besteht aus einem Bodendübel 98, in dem ein Schraubbolzen 100 höhenverstellbar angeordnet ist. Ausgehend von dem Schraubbolzen 100 erstreckt sich ein Querausleger 102, welcher über Muttern 104, 106 ebenfalls stufenlos höhenverstellbar ist. Ein Querausleger 102 ist die Laufschiene 94 über Schraubelement 108 befestigt. Auf der Laufschiene 94 bewegt sich der Schlitten 47, dessen Aufbau im Wesentlichen dem Aufbau des Schlittens 46 gem. Fig. 5 entspricht. Im Unterschied weist dieser Rollen 110, 112 auf, die eine glatte Oberfläche besitzen. Dadurch wird eine Querbewegung zwischen Rollen 100, 112 und Laufschiene 94 ermöglicht, wodurch Breitendifferenzen bzw. Fertigungsdifferenzen ausgeglichen werden können.

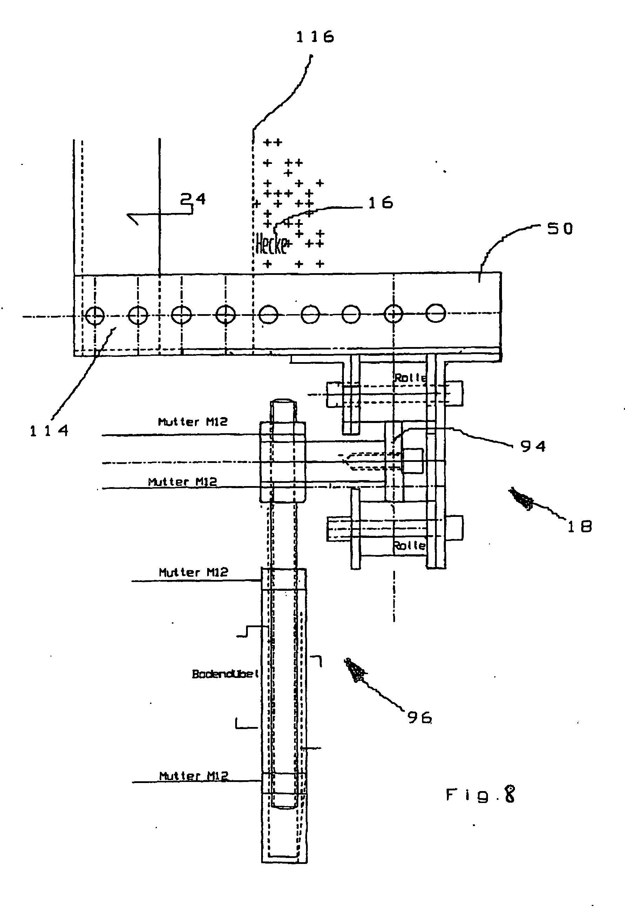

Fig. 8 zeigt eine Seitenansicht beispielsweise der Führungseinrichtung 18, wobei die Laufschiene 94 zusammen mit der Verankerung 96 unterhalb der Hecke 16 angeordnet ist. Dabei ist der Querträger 50 derart angeordnet, dass sein Ende 114 über eine Begrenzung 116 der Hecke nach außen hinausragt und das vertikale Rahmenelement 24 aufnehmen kann.

## Patentansprüche

1. Heckenschneidvorrichtung (10), umfassend ein in zumindest einer Führungseinrichtung (18, 20) entlang einer Hecke (16) verschiebbares Fahrgestell (12) zum Halten und Führen zumindest einer Heckenschere (14) mit Schnittbalken (30), wobei das Fahrgestell (12) als ein die Hecke (16) umschließender, in Höhe, Breite und Neigung variabel einstellbarer U-förmiger Rahmen (22) ausgebildet ist, mit vertikalen Rahmenelementen (24, 26), die bodenseitig in jeweils einer der Führungseinrichtungen (18, 20) geführt sind, und einem horizontalen Rahmenelement (28) zur Verbindung der vertikalen Rahmenelemente (24, 26),
**dadurch gekennzeichnet,**
**dass** die Heckenschere (14) als motorbetriebene Heckenschere ausgebildet ist, wobei der Schneidbalken (30) von einer Antriebseinheit ausgeht und auf einer der Hecke (16) zugewandten Seite und in einer von den Rahmenelementen aufgespannten Ebene an sich von den Rahmenelementen (24, 26, 28) in Richtung der Hecke (16) erstreckenden Befestigungselementen (32) befestigbar ist.

2. Heckenschneidvorrichtung (10) nach Anspruch 1,
**dadurch gekennzeichnet,**
**dass** das horizontale Rahmenelement (28) über Klemmelemente lösbar mit den vertikalen Rahmenelementen (24, 26) verbunden ist und dass die Rahmenelemente in ihrer Höhe, Breite und Neigung stufenlos einstellbar sind.

3. Heckenschneidvorrichtung (10) nach Anspruch 1 oder 2,
**dadurch gekennzeichnet,**
**dass** die Führungseinrichtungen (18, 20) quer zur Fahrtrichtung sich erstreckende Querträger (50) aufweisen, in denen die vertikalen Rahmenelemente (24, 26) verstellbar sind.

4. Heckenschneidvorrichtung (10) nach zumindest einem der vorhergehenden Ansprüche,
**dadurch gekennzeichnet,**
**dass** die motorbetriebene Heckenschere (14) eine handelsübliche elektrische oder kraftstoffbetriebene Handheckenschere ist.

5. Heckenschneidvorrichtung (10) nach zumindest einem der vorhergehenden Ansprüche,
**dadurch gekennzeichnet,**
**dass** die Befestigungselemente (32) als Schraubbolzen oder Abstandhalter ausgebildet sind.

6. Heckenschneidvorrichtung (10) nach zumindest einem der vorhergehenden Ansprüche,
**dadurch gekennzeichnet,**
**dass** der Schneidbalken (30) auf einem entlang eines der Rahmenelemente (24, 26, 28) verfahrbaren Schlitten befestigt ist.

7. Heckenschneidvorrichtung (10) nach zumindest einem der vorhergehenden Ansprüche,
**dadurch gekennzeichnet,**
**dass** die vertikalen Rahmenelemente (24, 26) bodenseitig mit jeweils Ober- und Unterrollen (92, 90; 110, 112) versehen sind.

8. Heckenschneidvorrichtung (10) nach zumindest einem der vorhergehenden Ansprüche,
**dadurch gekennzeichnet,**
**dass** die Führungseinrichtungen (18, 20) jeweils eine Laufschiene (56, 94) aufweisen, wobei diese vorzugsweise über Verankerungen (60, 96) in an die Hecke angrenzenden Boden wie Erdreich fixiert sind.

9. Heckenschneidvorrichtung (10) nach Anspruch 8,
**dadurch gekennzeichnet,**
**dass** die Führungsschienen (56, 94) separat in ihrer Höhe stufenlos einstellbar sind.

10. Heckenschneidvorrichtung (10) nach zumindest einem der vorhergehenden Ansprüche,
**dadurch gekennzeichnet,**
**dass** zumindest ein Rollenpaar (76, 78; 86, 88) jeweils eine Nut (90, 92) aufweist.

11. Heckenschneidvorrichtung (10) nach Anspruch 8 und 10,
**dadurch gekennzeichnet,**
**dass** das Rollenpaar (76, 78; 86, 88) quer zur Laufschiene (56) auf einer Achse verschiebbar angeordnet ist.

12. Heckenschneidvorrichtung (10) nach Anspruch 8,
**dadurch gekennzeichnet,**
**dass** die Laufschienen (56, 94) in Längsrichtung aus einzelnen Elementen bestehen, die vorzugsweise gesteckt oder verschraubt miteinander verbunden sind.

13. Heckenschneidvorrichtung (10) nach Anspruch 8,
**dadurch gekennzeichnet,**
**dass** die Laufschienen (56, 94) endseitig Stopper aufweisen.

14. Heckenschneidvorrichtung (10) nach Anspruch 8,
**dadurch gekennzeichnet,**
**dass** die Laufschienen (56, 94) unterhalb der Hecke (16) angeordnet sind.

## Claims

1. Hedge-trimming device (10) comprising a chassis (12) displaceable in at least one guide device (18, 20) along a hedge (16) for holding and guiding at least one hedge clipper (14) with cutter bar (30), where the chassis (12) is designed as a U-shaped frame (22) enclosing the hedge (16) and variable in height, width and angle, with vertical frame elements (24, 26) guided on the ground side in one of the guide devices (18, 20), and with a horizontal frame element (28) for connecting the vertical frame elements (24, 26),
wherein
the hedge clipper (14) is designed as a motor-powered hedge clipper, where the cutter bar (30) extends from a drive unit and is fastenable on a side facing the hedge (16) and in a plane formed by the frame elements on fastening elements extending from said frame elements (24, 26, 28) in the direction of the hedge (16).

2. Hedge-trimming device (10) according to Claim 1,
wherein
the horizontal frame element (28) is detachably connected to the vertical frame elements (24, 26) using clamping elements and the frame elements are infinitely adjustable in their height, width and angle.

3. Hedge-trimming device (10) according to Claim 1 or 2,
wherein
the guide devices (18, 20) have cross members (50) extending transversely to the direction of travel and inside which the vertical frame elements (24, 26) are adjustable.

4. Hedge-trimming device (10) according to at least one of the preceding claims,
wherein
the motor-powered hedge clipper (14) is a commercially available electric or fuel-operated hand hedge clipper.

5. Hedge-trimming device (10) according to at least one of the preceding claims,
wherein
the fastening elements (32) are designed as screw bolts or spacers.

6. Hedge-trimming device (10) according to at least one of the preceding claims,
wherein
the cutter bar (30) is fastened on a carriage moveable along one of the frame elements (24, 26, 28).

7. Hedge-trimming device (10) according to at least one of the preceding claims,
wherein
the vertical frame elements (24, 26) are each provided on the ground side with top and bottom rollers (92, 90; 110,112).

8. Hedge-trimming device (10) according to at least one of the preceding claims,
wherein
the guide devices (18, 20) each have a runner rail (56, 94), said rails preferably being fixed using anchors (60, 96) in the ground such as the soil adjacent to the hedge.

9. Hedge-trimming device (10) according to Claim 8,
wherein
the guide rails (56, 94) are separately and infinitely adjustable in their height.

10. Hedge-trimming device (10) according to at least one of the preceding claims,
wherein
at least one roller pair (76, 78; 86, 88) each has one groove (90, 92).

11. Hedge-trimming device (10) according to Claims 8 and 10,
wherein
the roller pair (76, 78; 86, 88) is arranged transversely to the runner rail (56) and displaceable on one axis.

12. Hedge-trimming device (10) according to Claim 8,
wherein
the runner rails (56, 94) comprise in the longitudinal direction individual elements which are connected to one another preferably by being inserted or screwed in.

13. Hedge-trimming device (10) according to Claim 8,
wherein
the runner rails (56, 94) have stoppers at the ends.

14. Hedge-trimming device (10) according to Claim 8,
wherein
the runner rails (56, 94) are arranged underneath the hedge (16).

## Revendications

1. Dispositif taille-haie (10) comprenant un châssis (12) pouvant être déplacé dans au moins un dispositif de guidage (18, 20) le long d'une haie (16), pour maintenir et guider au moins un taille-haie (14) avec une lame de coupe (30), sachant que le châssis (12) est conçu en tant que cadre (22) en forme de U entourant la haie (16), dont la hauteur, la largeur et l'inclinaison peuvent être réglées de manière variable, avec des éléments de cadre verticaux (24, 26) qui sont guidés, côté sol, dans respectivement un des dispositifs de guidage (18, 20), et avec un élément de cadre horizontal (28) permettant de relier les éléments de cadre verticaux (24, 26),
**caractérisé en ce**
**que** le taille-haie (14) est conçu en tant que taille-haie à moteur, sachant que la lame de coupe (30) part d'une unité d'entraînement et peut être fixée, sur une face tournée vers la haie (16) et sur un plan formé par les éléments de cadre, à des éléments de fixation (32) s'étendant en direction de la haie (16) à partir des éléments de cadre (24, 26, 28).

2. Dispositif taille-haie (10) selon la revendication 1,
**caractérisé en ce**
**que** l'élément de cadre horizontal (28) est relié de manière amovible aux éléments de cadre verticaux (24, 26) par des éléments de serrage, et que la hauteur, la largeur et l'inclinaison des éléments de cadre peuvent être réglées sans palier.

3. Dispositif taille-haie (10) selon la revendication 1 ou 2,
**caractérisé en ce**
**que** les dispositifs de guidage (18, 20) présentent des traverses (50) s'étendant transversalement au sens de marche, dans lesquelles les éléments de cadre verticaux (24, 26) sont réglables.

4. Dispositif taille-haie (10) selon au moins l'une des revendications précédentes,
**caractérisé en ce**
**que** le taille-haie à moteur (14) est un taille-haie à main électrique ou thermique du commerce.

5. Dispositif taille-haie (10) selon au moins l'une des revendications précédentes,
**caractérisé en ce**
**que** les éléments de fixation (32) sont conçus sous forme de boulons filetés ou d'entretoises.

6. Dispositif taille-haie (10) selon au moins l'une des revendications précédentes,
**caractérisé en ce**
**que** la lame de coupe (30) est fixée sur un chariot pouvant être déplacé le long d'un élément de cadre (24, 26, 28).

7. Dispositif taille-haie (10) selon au moins l'une des revendications précédentes,
**caractérisé en ce**
**que** les éléments de cadre verticaux (24, 26) sont respectivement pourvus côté sol de galets supérieurs et inférieurs (92, 90 ; 110, 112).

8. Dispositif taille-haie (10) selon au moins l'une des revendications précédentes,
**caractérisé en ce**
**que** les dispositifs de guidage (18, 20) présentent respectivement un rail de roulement (56, 94), sachant que ceux-ci sont fixés de préférence par l'intermédiaire d'ancrages (60, 96) dans le sol se trouvant au pied de la haie, tel que de la terre.

9. Dispositif taille-haie (10) selon la revendication 8,
**caractérisé en ce**
**que** les rails de guidage (56, 94) peuvent être réglés séparément en hauteur, sans palier.

10. Dispositif taille-haie (10) selon au moins l'une des revendications précédentes,
**caractérisé en ce**
**qu'**au moins une paire de galets (76, 78 ; 86, 88) présente respectivement une gorge (90, 92).

11. Dispositif taille-haie (10) selon les revendications 8 et 10,
**caractérisé en ce**
**que** la paire de galets (76, 78, 86, 88) est disposée transversalement au rail de roulement (56) de manière à pouvoir être déplacée sur un axe.

12. Dispositif taille-haie (10) selon la revendication 8,
**caractérisé en ce**
**que** les rails de roulement (56, 94) sont, dans le sens longitudinal, constitués de différents éléments qui sont reliés entre eux de préférence par emboîtement ou vissage.

13. Dispositif taille-haie (10) selon la revendication 8,
**caractérisé en ce**
**que** les rails de roulement (56, 94) présentent des butoirs à chaque extrémité.

14. Dispositif taille-haie (10) selon la revendication 8,
**caractérisé en ce**
**que** les rails de roulement (56, 94) sont disposés au-dessous de la haie (16).
